## Europäisches Patentamt
## European Patent Office
## Office européen des brevets

(19)

(11) Numéro de publication : **0 208 573**
**B1**

(12)

# FASCICULE DE BREVET EUROPÉEN

(45) Date de publication du fascicule du brevet :
**11.10.89**

(21) Numéro de dépôt : **86401208.3**

(22) Date de dépôt : **05.06.86**

(51) Int. Cl.⁴ : **D 21 H 5/10**, G 06 K 19/08, G 07 D 7/00

(54) Document de sécurité utilisant des fibres optiques et procédé d'authentification.

(30) Priorité : **24.06.85 FR 8509586**

(43) Date de publication de la demande :
**14.01.87 Bulletin 87/03**

(45) Mention de la délivrance du brevet :
**11.10.89 Bulletin 89/41**

(84) Etats contractants désignés :
**AT BE CH DE FR GB IT LI LU NL SE**

(56) Documents cités :
**EP--A-- 0 064 102**
**WO--A--81 /035 09**
**FR--A-- 2 365 657**
**GB--A-- 1 604 463**
**GB--A-- 2 148 486**
**US--A-- 3 728 521**
**US--A-- 4 138 057**

(73) Titulaire : **ARJOMARI-PRIOUX Société anonyme dite**
**3, rue du Pont de Lodi**
**F-75261 Paris Cedex 06 (FR)**

(72) Inventeur : **Camus, Michel**
**Lieu dit "Le Guillermet"**
**F-38850 Charavines (FR)**

(74) Mandataire : **Portal, Gérard et al**
**Cabinet Beau de Loménie 55, rue d'Amsterdam**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 208 573 B1

## Description

L'invention concerne un document de sécurité comportant comme moyen de sécurité un produit dont certaines propriétés spécifiques sont détectables.

Les techniques et les appareillages dont disposent les faussaires évoluent et leur permettent d'imiter plus rapidement et plus facilement les techniques d'authentification notamment pour les billets de banques tout en obligeant les professionnels à rechercher sans cesse de nouveaux dispositifs.

Pour se prémunir contre les contrefaçons de documents de sécurité tels que billets de banque, titres, actions, cartes d'identité, chèques et autres documents de valeur, on a déjà proposé l'utilisation de moyens de sécurité divers tels que les filigranes, les fibres colorées et/ou métalliques et/ou métallisées, le défaut d'azurant optique, les bandelettes ou fils de sécurité qu'ils soient imprimés, métallisés, fluorescents ou magnétiques. Ces moyens de sécurité sont dits « de reconnaissance » car ils permettent de reconnaître l'authenticité d'un tel document (cf. GB-A-1 353 244, GB-A-440 421, EP-A-66 854).

La mise au point de moyens de sécurité nouveaux amène donc l'Homme de métier vers l'étude de produits de haute technicité :

dont la réalisation devra comporter l'utilisation de ressources qui de par leur nature, leur complexité ou d'autres facteurs ne seront pas normalement accessibles au contrefacteur avant quelques années,

dont la reconnaissance par le grand public soit si possible facile sans recours à l'utilisation d'appareils sophistiqués,

dont l'authentification par les utilisateurs professionnels tels que les banques puisse être réalisée au moyen d'un dispositif de contrôle automatique, rapide et fiable.

L'utilisation grand public conduit généralement vers l'emploi de systèmes optiques permettant une identification visuelle sous éclairage naturel ou artificiel, notamment obtenu au moyen d'une lampe de WOOD.

Il est ainsi déjà connu d'utiliser des fibres synthétiques contenant dans leur masse ou à leur surface des substances luminescentes à base de terre rares (EP-A-66 854 et FR-A-1 522 465). Toutefois, de tels moyens sont peu fiables dans leur utilisation grand public, car imitables par impression avec des encres ou vernis contenant les mêmes substances (FR-A-1 471 367).

On connaît également, par les documents GB-A-2 148 486, GB-A-2 099 756, US-A-4 138 057 et US-A-3 728 521 des documents de sécurité comprenant un support incorporant au moins une fibre optique ou plus, généralement un ensemble de plusieurs fibres optiques destinées à former une information codée. L'authentification du document est réalisée en illuminant une extrémité des fibres et en observant la lumière transmise à l'autre extrémité.

Une telle technique exige des moyens de détection relativement compliqués pour pouvoir illuminer et observer convenablement les extrémités des fibres optiques. Par ailleurs, ces documents sont fragiles car la cassure involontaire d'une fibre empêche la transmission de lumière et fausse donc le message observé.

L'invention a pour but de proposer un nouveau moyen de sécurité, utilisant les fibres optiques, mais ne présentant pas les inconvénients précités.

Ce but est atteint selon l'invention du fait que la fibre optique est à gaine transparente et en ce que l'épaisseur du support recouvrant la fibre optique est inférieure à la profondeur de pénétration dans la matière de ce support d'au moins un rayonnement électromagnétique à piéger dans la fibre optique.

Ainsi, selon le procédé d'authentification lié à l'invention, on expose le document à une source de rayonnements électromagnétiques de manière à atteindre une partie de la surface de la gaine de la fibre optique et on observe les rayonnements transmis à l'une ou l'autre des extrémités de la fibre optique.

Dans le cas le plus général, celui d'un support papetier où une extrémité de la ou des fibres optiques affleure une tranche du support, on expose au rayonnement une face du support et on observe la tranche.

Un des avantages de l'invention, réside dans la grande surface d'exposition de la fibre au rayonnement. Un autre avantage consiste en ce que, si une fibre se casse en deux, chaque morceau de fibre continue à recevoir sur sa surface une partie du rayonnement, et la transmet vers l'extrémité affleurant la tranche du support.

Un autre avantage de l'invention est la possibilité d'utiliser diverses propriétés optiques pouvant être données par dopage aux fibres pour coder les supports ainsi marqués.

On sait que les fibres optiques canalisent des ondes électromagnétiques de différentes longueurs d'onde, en particulier la lumière, vers l'une au moins de leurs extrémités en raison de la différence d'indice de réfraction entre les matériaux constituant le coeur et la gaine de ces fibres.

Le moyen de sécurité selon l'invention est basé sur la transmission vers au moins une des extrémités des fibres optiques des ondes électromagnétiques, en particulier la lumière, l'ultraviolet ou l'infrarouge. Ces ondes sont captées au travers de la gaine transparente de la fibre, et piégées dans celle-ci du fait de la différence d'indices de réfraction.

On peut utiliser des fibres incolores non dopées transmettant toutes les longueurs d'onde captées.

Mais une longueur d'onde spécifique peut être, du fait d'un dopage du coeur de la fibre avec des substances luminophores adaptées, transmise préférentiellement par chaque fibre.

Le rayonnement transmis pourra notamment être compris dans le spectre visible, l'ultraviolet ou l'infrarouge pour permettre en particulier un codage visualisable des documents sécuriser.

Ce codage peut être réalisé au moyen d'une seule fibre optique spécifique ou par association de plusieurs fibres optiques, ou encore en association avec d'autres moyens de sécurité connus tels que les fils luminescents.

Pour réaliser le codage par association de plusieurs fibres optiques on peut réaliser une bandelette de sécurité en mettant côte à côte les fibres optiques et en les collant pour ensuite faciliter leur introduction et leur positionnement dans le document.

Les fibres optiques nécessaires à la réalisation de l'invention sont choisies en fonction de leur tenue dans le temps indispensable à l'efficacité du système de sécurité, et de leur résistance mécanique en raison des contraintes auxquelles elles seront soumises tout au long de la vie du document, par exemple le pliage et le froissage pour les billets de banques (même si, comme on l'a mentionné, le document de l'invention peut continuer à fonctionner de manière encore satisfaisante après certaines cassures de fibres).

De ce fait, les fibres optiques minérales à base de silice et de verre seront généralement écartées pour tous les supports non rigides en raison de leur caractère cassant mais aussi de leur coût.

On leur préfèrera des fibres en matière plastique, notamment organiques, très souples, plus économiques et dont la qualité de transmission est maintenant satisfaisante.

On utilisera de préférence, pour réaliser l'invention, les fibres optiques décrites dans les demandes de brevet français FR-A-2 533 709 et FR-A-2 545 616, et en particulier des fibres optiques fluorescentes dont le cœur est dopé avec des produits fluorescents absorbant certaines longueurs d'onde pour réémettre des rayonnements de longueurs d'onde différentes qui sont canalisés dans ces fibres.

Les fibres décrites dans ces documents présentent par ailleurs à leurs extrémités un angle solide d'émission ou de réception de rayonnement suffisamment important pour qu'en cas de rupture accidentelle de la fibre dans le support, la transmission du flux lumineux puisse être assurée sans perte importante d'intensité entre les deux tronçons engendrés par la cassure.

Les fibres optiques disponibles sont monocœur ou multicœur (FR-A-2 545 616) et sont introduites dans le support à sécuriser par les techniques connues de l'Homme du métier pour l'introduction de fils et bandelettes dans les documents de sécurité. Elles peuvent être en particulier introduites individuellement ou au moyen d'un élément porteur, notamment fils et bandelettes de sécurité, dont elles seraient solidaires.

A titre d'exemple, un papier de sécurité selon l'invention pourra être obtenu en dévidant la fibre optique durant la formation de la feuille sur la forme ronde ou la table plate d'une machine à papier, ou en insérant ladite fibre entre deux jets humides de papier pour les machines disposant de plusieurs formes rondes et/ou tables plates. Les procédés papetiers utilisables pour la formation de la feuille sont notamment décrits dans l'ouvrage de J.P. CASEY « Pulp and Paper, Chemistry and Chemical Technolgy », (3ème édition 1880, vol. 2. Ed. Wiley Interscience Publication — John Wiley and sons — New-York Chichester).

Comme on désire piéger la lumière reçue par la surface de la fibre, la transparence du support au flux lumineux doit être suffisante pour que la lumière atteigne la surface de la fibre optique, au moins dans certaines régions du support et de la fibre.

En d'autres termes, l'épaisseur du support recouvrant dans lesdites régions la fibre optique doit être inférieure à la profondeur de pénétration de la longueur d'onde à piéger dans la fibre optique dans la matière constituant le support.

Pour les matériaux d'opacité élevée, le fil sera nécessairement proche de l'une des surfaces du support ; ce sera en particulier le cas pour les papiers à fort grammage. La dissymétrie ainsi générée pourra être accessoirement utilisée comme moyen de reconnaissance de chacune des faces du support ou comme élément de codage supplémentaire.

L'invention sera mieux comprise à l'aide des quatre exemples suivants.

Exemple 1

Une fibre optique « PLASTIFO F 201 » de 20 um de diamètre est introduite entre deux jets humides d'un support cellulosique de 40 $g/m^2$ chacun pour former après pressage et séchage dans les conditions de fabrication de papier multijets, un document de sécurité de 80 $g/m^2$ présentant sur sa tranche, par irradiation spécifique à 400 nm sur sa surface, un point luminescent vert dû au rayonnement lumineux transmis de longueur d'onde 500 nm.

Le point luminescent vert est visible par l'Homme de la rue du simple fait de l'exposition du document à la lumière du jour.

Exemple 2

On produit un document de sécurité suivant les indications de l'exemple 1 avec une fibre optique « PLASTIFO F 200 », mais l'excitation est obtenue au moyen d'une lampe de WOOD dans le spectre U.V. aux environs de 360 nm et l'émission est visible dans le bleu vers 420 nm.

Exemple 3

On associe les deux fibres précédentes dans un même support suivant le mode opératoire de l'exemple 1 pour réaliser un codage simple.

Exemple 4

Une fibre optique de même nature que la « PLASTIFO F 201 » a été fabriquée de manière à obtenir une fibre optique plate dont l'épaisseur et la largeur sont respectivement de 35 um, et 0,75 mm.

Cette fibre optique donne la même réponse que la « PLASTIFO F 201 » de l'exemple 1 sous irradiation à 400 nm.

Cependant, la forme plate de la fibre optique, plus proche de celle des bandelettes de sécurité déjà utilisées en papeterie, présente par rapport aux fibres optiques rondes, les avantages suivants :

plus grande facilité de fabrication du document, exposition à la source excitatrice d'une plus grande surface, à épaisseur et longueur égales par rapport à la fibre ronde,

meilleure perception du phénomène lumineux à l'extrémité de la fibre optique affleurant le support, du fait de la section beaucoup plus importante de la fibre optique plate, par rapport à une fibre optique ronde de même épaisseur.

Nota : les fibres « PLASTIFO F 200 » et « F 201 » sont les dénominations commerciales de fibres produites par la Société OPTECTRON sous licence CEA. Les fibres présentent un coeur en styrène dopé avec des substances fluorescentes et une gaine de copolymère de styrène et de méthacrylate de méthyl. Les fibres de faible diamètre utilisées dans les exemples sont obtenues par étirage de fibres commerciales.

L'authentification du document conforme à l'invention est réalisable par un test non destructeur.

L'authentification visuelle par le grand public peut se faire par l'observation à l'oeil nu de l'une des tranches du document après avoir éclairé la surface du document lorsqu'on utilise des fibres à gaine transparente qui réémettent dans le spectre visible. En fait, il suffit d'éclairer naturellement l'ensemble du document, le point lumineux sur tranche ressortant à l'oeil nu par contraste.

Pour les organismes professionnels, on peut envisager un système de détection automatique constitué par exemple d'une source de lumière poly ou monochromatique éclairant le document sur sa surface, associée à un ou des détecteurs de longueurs d'onde monochromatiques spécifiques des longueurs d'onde d'émission des dopants de chaque fibre optique utilisés et orientés vers l'une des extrémités de chacune de ces fibres.

La portée de l'invention n'est pas limitée aux seuls exemples qui précèdent ou aux seuls documents de sécurité décrits ci-dessus.

L'invention peut être notamment étendue :

à la confection de cartes de crédit par plastification d'un papier contenant la fibre optique ou par inclusion de la fibre optique dans la masse de la carte par des moyens connus des fabricants de cartes,

à la confection d'emballages et d'étiquettes pour permettre en particulier aux fabricants des industries de luxe de localiser les contrefacteurs ou des distributeurs non respectueux de leurs contrats.

D'autres caractéristiques et avantages ressortiront de la description suivante faite en référence aux dessins annexés sur lesquels :

la figure 1 représente schématiquement un premier dispositif d'authentification,

la figure 2 représente schématiquement un second dispositif d'authentification.

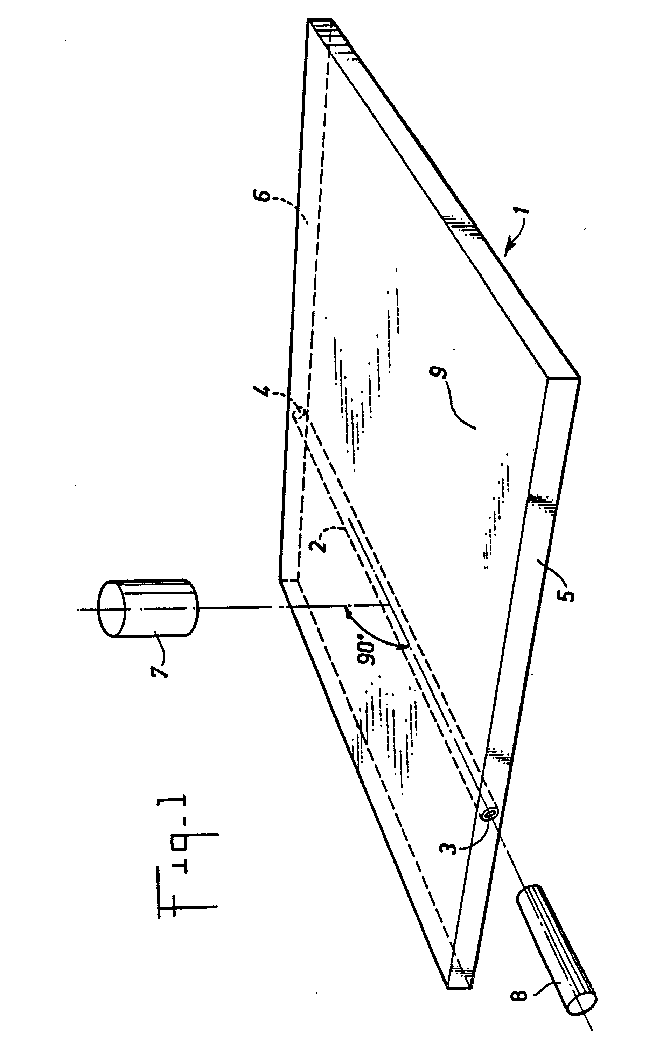

La figure 1 représente schématiquement à titre d'exemple un document de sécurité conforme à l'invention et le principe du procédé d'authentification utilisé.

Le document de sécurité 1 comporte intérieurement une fibre optique 2 dont les extrémités 3 et 4 affleurent les tranches 5 et 6 du support 1.

Une source de rayonnement 7 perpendiculaire à la face principale 9 du support 1 émet un rayonnement électromagnétique dirigé vers la surface de la gaine de la fibre 2, laquelle transmet vers ses extrémités 3 et 4 un rayonnement observable par exemple par le détecteur 8 placé dans le prolongement de la fibre, ou directement par l'oeil humain.

Le cas échéant, la source 7 peut être le soleil.

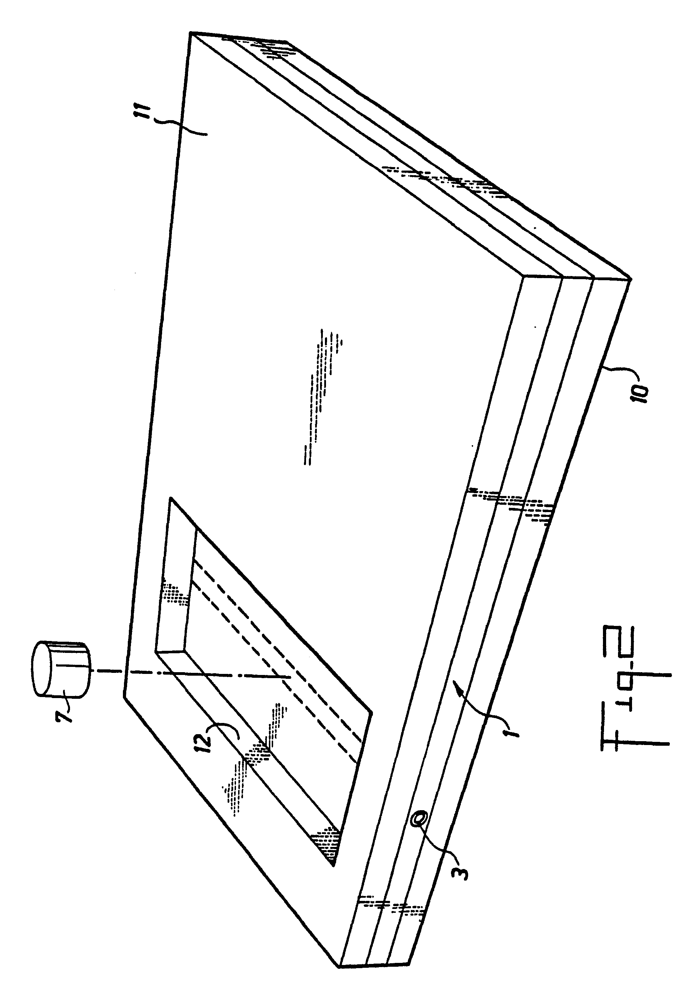

Sur la figure 2, le support 1 passe dans un dispositif composé des plaques 10 et 11 d'un matériau opaque au rayonnement émis par la source 7. Seule une fenêtre 12 aménagée dans la plaque 11 permet au rayonnement d'atteindre une partie contrôlée de la face du support et donc de la surface de la gaine de la fibre. La fenêtre 12 peut être constituée par un simple évidement de la plaque 11, ou par un évidement comblé par un matériau transparent au rayonnement d'excitation. La solution de la figure 2 présente l'avantage de renforcer la sécurité de l'authentification, en faisant jouer un rôle à la localisation exacte de la fibre dans le support.

On peut aussi concevoir des documents de sécurité dans lesquels les plaques 10 et 11 sont intégrées à chaque document, pour constituer le sandwich d'une carte de crédit par exemple.

Pour des raisons de simplicité, les dessins montrent schématiquement un faisceau unidirectionnel dirigé orthogonalement sur la fibre, dans les conditions telles qu'on pourrait croire que le rayonnement incident ne va pas être réfracté — et donc piégé — dans la fibre optique.

En fait, il faut comprendre que les rayonnements utilisés en pratique sont rarement unidirectionnels, que de plus, en cas contraire, on peut s'arranger pour diriger le faisceau vers la fibre sous un angle permettant la réfraction du faisceau. Enfin, il faut tenir compte du fait que le support (voire la fibre optique elle-même) peut contenir un matériau entraînant une diffraction des rayonnements incidents (c'est le cas de la cellulose pour les supports papetiers).

**Revendications**

1. Document de sécurité du type comprenant un support (1), au moins une fibre optique (2) dont au moins une extrémité (3, 4) affleure une surface (5, 6) du support (1) de manière à permettre l'authentification du document par un test basé sur l'exposition du document à une source (7) de rayonnements électromagnétiques et l'observation des rayonnements transmis à l'une ou l'autre des extrémités (3, 4) de la fibre optique, caractérisé en ce que la fibre optique (2) est à gaine transparente et en ce que l'épaisseur du support (1) recouvrant la fibre optique (2) est inférieure à la profondeur de pénétration dans la matière de ce support d'au moins un rayonnement électromagnétique à piéger dans la fibre optique (2).

2. Document de sécurité selon la revendication 1, caractérisé en ce que la fibre optique (2) est une fibre organique.

3. Document de sécurité selon la revendication 2, caractérisé en ce que le matériau constituant le coeur de la fibre optique (2) est à base de polystyrène.

4. Document de sécurité selon l'une quelconque des revendications 2 ou 3, caractérisé en ce que le matériau constitutif de la gaine de la fibre optique (2) est à base d'un copolymère de styrène et de métacrylate de méthyl.

5. Document de sécurité selon l'une quelconque des revendications 1 à 4, caractérisé en ce que la fibre optique (2) est fluorescente.

6. Document de sécurité selon l'une quelconque des revendications 1 à 5, caractérisé en ce que la fibre optique est plate.

7. Document de sécurité selon l'une quelconque des revendications 1 à 6, caractérisé en ce que le support (1) est un support papetier.

8. Document de sécurité selon la revendications 7, caractérisé en ce que la surface (5, 6) d'affleurement de l'extrémité (3, 4) de la fibre optique (2) est une tranche du support (1).

9. Procédé d'authentification d'un document de sécurité conforme à l'une quelconque des revendications 1 à 8, caractérisé en ce qu'on expose le document à une source (7) de rayonnements électromagnétiques de manière à atteindre une partie de la surface de la gaine de la fibre optique et en ce qu'on observe les rayonnements transmis à l'une ou l'autre des extrémités (3, 4) de la fibre optique (2).

10. Procédé selon la revendications 9 d'authenfication d'un document selon la revendication 8, caractérisé en ce qu'on expose une face du support papetier (1) et on observe une tranche (5, 6) dudit support (1).

## Claims

1. Security document of the type comprising a substrate (1), at least one optical fiber (2) of which at least one end (3, 4) is flush with a surface (5, 6) of the substrate (1) so as to allow authentication of the document by a test based on the exposure of the document to a source (7) of electromagnetic radiation and the observation of the radiation transmitted by one or the other of the ends (3, 4) of the optical fiber, characterized in that the optical fiber (2) has a transparent sheath and in that the thickness of the substrate (1) covering the optical fiber (2) is less than the depth of penetration into the material of this substrate by at least one electromagnetic radiation to be trapped in the optical fiber (2).

2. Security document according to claim 1, characterized in that the optical fiber (2) is an organic fiber.

3. Security document according to claim 2, characterized in that the material forming the core of the optical fiber (2) is based on polystyrene.

4. Security document according to any one of claims 2 or 3, characterized in that the material forming the sheath of the optical fiber (2) is based on a copolymer of styrene and of methyl methacrylate.

5. Security document according to any one of claims 1 to 4, characterized in that the optical fiber (2) is fluorescent.

6. Security document according to any one of claims 1 to 5, characterized in that the optical fiber is flat.

7. Security document according to any one of claims 1 to 6, characterized in that the substrate (1) is a paper substrate.

8. Security document according to claim 7, characterized in that the surface (5, 6) flush with the end (3, 4) of the optical fiber (2) is an edge of the substrate (1).

9. Process for the authentication of a security document according to any one of claims 1 to 8, characterized in that the document is exposed to a source (7) of electromagnetic radiation so that it reaches part of the surface of the sheath of the optical fiber and in that the radiations transmitted to one or the other of the ends (3, 4) of the optical fiber (2) are observed.

10. Process according to claim 9 for the authentication of a document according to claim 8, characterized in that one face of the paper substrate (1) is exposed and one edge (5, 6) of the substrate (1) is observed.

## Patentansprüche

1. Sicherheitsdokument des Typs umfassend einen Träger (1), mindestens eine optische Faser (2) von der zumindest ein Ende (3, 4) in einer Oberfläche (5, 6) des Trägers (1) derart eingelassen ist, daß die Authentifizierung des Dokuments mit einem Test auf Basis einer Behandlung des Dokuments mit einer Quelle (7) elektromagnetischer Strahlung und Beobachtung der zum einen oder anderen Ende (3, 4) der optischen Faser übertragenen Strahlung möglich ist, dadurch gekennzeichnet, daß die optische Faser (2) mit einem transparenten Überzug versehen ist und die Dicke des die optische Faser (2) bedeckenden Trägers (1) geringer als die Penetrationstiefe mindestens einer in der optischen Faser (2) zu fangenden elektromagnetischen Strahlung im Material dieses Trägers ist.

2. Sicherheitsdokument nach Anspruch 1, dadurch gekennzeichnet, daß die optische Faser (2) eine organische Faser ist.

3. Sicherheitsdokument nach Anspruch 2, dadurch gekennzeichnet, daß das den Kern der optischen Faser (2) bildende Material auf Polystyrol basiert.

4. Sicherheitsdokument nach einem der Ansprüche 2 oder 3, dadurch gekennzeichnet, daß das die Hülle der optischen Faser (2) bildende Material auf einem Copolymer aus Styrol und Methylmethacrylat basiert.

5. Sicherheitsdokument nach einem der Ansprüche 1 bis 4, dadurch gekennzeichnet, daß die optische Faser (2) fluoreszierend ist.

6. Sicherheitsdokument nach einem der Ansprüche 1 bis 5, dadurch gekennzeichnet, daß die optische Faser flach ist.

7. Sicherheitsdokument nach einem der Ansprüche 1 bis 6, dadurch gekennzeichnet, daß der Träger (1) ein Papierträger ist.

8. Sicherheitsdokument nach Anspruch 7, dadurch gekennzeichnet, daß die Fläche (5, 6) zum Einlassen des Endes (3, 4) der optischen Faser (2) ein Schnittrand des Trägers (1) ist.

9. Verfahren zur Authentifizierung eines Sicherheitsdokuments gemäß einem der Ansprüche 1 bis 8, dadurch gekennzeichnet, daß man das Dokument einer Quelle (7) elektromagnetischer Strahlung derart aussetzt, daß ein Teil der Oberfläche der Hülle der optischen Faser erreicht wird, und daß man die zum einen oder anderen Ende (3, 4) der optischen Faser (2) übermittelte Strahlung beobachtet.

10. Verfahren nach Anspruch 9 zur Authentifizierung eines Dokuments nach Anspruch 8, dadurch gekennzeichnet, daß man eine Seite des Papierträgers (1) aussetzt und einen Schnittrand (5, 6) dieses Trägers (1) beobachtet.

Fig-1

90°

EP 0 208 573 B1

Fig.2